# EUROPEAN PATENT APPLICATION

(11) **EP 2 034 420 A1**
(43) Date of publication of application: **11.03.2009**
(21) Application number: 07721425.2
(22) Date of filing: 12.06.2007
(51) Int. Cl.: G06F 17/40, H04L 9/32

(54) **A METHOD AND AN APPARATUS FOR OPERATING RIGHT**

(30) Priority: 26.06.2006 CN 200610091598
(71) Applicant: Huawei Technologies Co., Ltd., Longgang District, Shenzhen Guangdong 518129 (CN)
(72) Inventor: LI, Yimin, Shenzhen, Guangdong 518129 (CN); ZHANG, Renzhou, Shenzhen, Guangdong 518129 (CN); SHI, Guoxin, Shenzhen, Guangdong 518129 (CN); DANG, Pei, Shenzhen, Guangdong 518129 (CN); FENG, Wenjie, Shenzhen, Guangdong 518129 (CN); ZHOU, Chen, Shenzhen, Guangdong 518129 (CN); ZHOU, Haojun, Shenzhen, Guangdong 518129 (CN)
(74) Representative: Pfenning, Meinig & Partner GbR
(86) International application number: PCT/CN2007/001852
(87) International publication number: WO 2008/003222

(57) **Abstract**

A method for operating a Right For Contents (R4C) includes: obtaining, by a terminal, a hybrid RO generated by the RI server, with the R4C items and the operation Rights For Rights (R4Rs) carried in the hybrid RO; operating the R4C items in the hybrid RO according to the R4R. A method for adding an R4R includes: a terminal receives a hybrid RO which contains the existing rights of the terminal and the newly added R4R; the terminal operates the R4C in the hybrid RO according to the new R4R. The present invention also discloses a terminal and a server. The present invention enables the RI to control the rights at a finer granularity, intensifies the RI's control on the rights, and provides a mechanism of purchasing an R4R after an RO is purchased.

## Description

### FIELD OF THE INVENTION

The present invention relates to the Digital Rights Management (DRM) technology, especially, to a method and an apparatus for operating rights.

### BACKGROUND

The DRM technology prevents users from illegally copying and moving digital media contents through the network and computer, and is one of the prerequisites of selling media contents through the network. The basic principles of the DRM technology are: the Content Issuer (CI) uploads the encrypted digital media contents to the network server for being downloaded by the users, and submits the decryption key and use rights of the media contents to the Right Issuer (RI) for managing. The RI writes the information such as key and use rights into the operation rights control information (for example, Right Object (RO), which is a form of operating the rights control information). In order to use the media contents, the user not only needs to download the encrypted media content - DRM Content Format (DCF) from the CI server, but also needs to purchase the RO corresponding to the media content from the RI. In this way, the DRM Agent module on the terminal will be able to read the Content Encrypt Key (CEK) in the RO to decrypt the media content, and control the user to use the media content according to the rights information described in the RO.

However, in the process of consuming media contents, the consumers are especially interested in sharing, gifting and propagating media contents. In the aforementioned model, content media are protected with encryption. Such activities are converted to the activities of the consumers sharing, gifting and propagating the Right For Content (R4C). Therefore, the consumers need to be capable of operating the rights.

A common solution is to provide a method that enables the developer to control the operation rights of the consumer, for example, control the number of times of moving a right; and the consumer can only operate the rights within the control limit. For example, the conventional art provides a function of exporting an RO, but cannot clarify the details of the exported object, which tends to cause confusion or is unable to meet the individualized requirements. In the conventional art, the <export> label in the RO is designed to perform exporting. This label provides only the exporting mode (copying or moving) and the target DRM system for exporting, and does not clarify the details of the exported object (for example, whether the exported object contains the current consumption status of the right), which tends to cause confusion and undesired disputes in the commercial implementation. Suppose that an RO contains a right of playing a content for 10 times and an exporting right, after the user plays the content twice, the user exports the content. Consequently, the export result can be understood in two ways: the export result contains a right of playing the content for eight times, or the export result contains a right of playing the content for 10 times. That is because: the <export> label is not self-explanatory, and cannot clarify the details of the exported object (namely, cannot clarify whether the exported object is the combination of the original right and the current consumption status, or is the original right only). Although the conventional art clarifies the details in the technical document (that the exported object does not include the current consumption status), it is easy to cause trouble of understanding in the commercial application. Moreover, the conventional art is unable to meet individualized requirements. Some RIs or consumers require the exported object with the current consumption status, which is unavailable from the conventional art.

The inventor finds out that the conventional art can only control the consumers to operate an RO as a whole, and cannot control the consumers to operate a specific right item in the RO. That is because: (i) the right description language about rights in the conventional art, for example, the control information of copying in the conventional art does not describe the specific right item, but describes the whole RO by default; and (ii) the right description language about media contents in the conventional art does not identify the right item itself;Therefore, it is technically unsupported to operate a specific right item and control such an operation. Moreover, the conventional art is unable to control the devices involved in the right operation. If the right operation is copying, moving or exporting, the conventional art is unable to control the attributes such as type of the target device.

Furthermore, the inventor finds that the conventional art does not support the mechanism of adding a Right For Rights (R4R) after purchase of an RO. The consumer has to specify whether to purchase rights and specify the details of the R4R at the time of purchasing an RO. Otherwise, the obtained RO enables no operation except reading.

### SUMMARY

The present invention provides a method and an apparatus for operating rights so that a terminal can operate a right item and add a right.

The present invention provides a method for operating a Right For Contents (R4C), including:
obtaining, by a terminal, a hybrid RO generated by the RI server, with the R4C items and the operation Rights For Rights (R4Rs) carried in the hybrid RO; and
operating the R4C items in the hybrid RO according to the R4R.

The present invention further provides a method for adding an R4R, including:
obtaining, by an RI server, the existing RO of the terminal, with the RO containing an R4C;
generating R4R information which indicates that the terminal is entitled to operate an R4C; and
sending the R4R information to the terminal.

The present invention further provides a method for adding an R4R includes:
receiving, by a terminal, a Right Object for Rights (RO4R) from the RI server, with the R4R item carried in the RO; and
operating the R4C according to the R4R item.

The present invention still further provides a method for adding an R4R includes:
receiving, by a terminal, a hybrid RO from the RI server, with the hybrid RO carrying the existing right of the terminal and a newly added R4R;
substituting, by the terminal, the received hybrid RO for the existing RO; and
operating the R4C in the hybrid RO according to the new R4R.

The present invention provides a terminal, including:
a module for obtaining a hybrid RO generated by the RI server, wherein the hybrid RO contains R4C items and R4Rs; and
a module for operating an R4C item in the hybrid RO according to the R4R.

The present invention further provides a server, including:
a module for obtaining the existing RO of the terminal, with an R4C carried in the RO;
a module for generating the R4R information which indicates that the terminal is entitled to operate the R4C; and
a module for sending the R4R information to the terminal.

The present invention further provides another terminal, including:
a module for receiving an RO4R from the RI server, with the R4R item carried in the RO; and
a module for operating an R4C according to the R4R item.

The present invention provides another terminal, including:
a module for receiving a hybrid RO from the RI server, with the existing right of the terminal and a newly added R4R carried in the hybrid RO;
a module for substituting the received hybrid RO for the existing RO; and
a module for operating the R4C in the hybrid RO according to the new R4R.

The present invention accomplishes finer granularity for an RI to control the rights, intensifies the RI's control on the rights, meets the individualized requirements of the consumers to a greater extent, and improves their consumption experience. The present invention provides a mechanism of purchasing an R4R after the event. In this way, the consumers can decide whether to add a right of operating the right after purchasing an RO. When purchasing an RO initially, the consumers do not need to consider whether it is necessary to copy or move a right in the RO in the future, thus improving the consumption experience of the consumers greatly.

### BRIEF DESCRIPTION OF THE DRAWINGS

Figure 1 shows the relations between RO4R, RO and DCF in an embodiment of the present invention.

Figure 2 shows the relation between a hybrid RO and a DCF in an embodiment of the present invention.

Figure 3 is a signaling flowchart of adding an R4R in an embodiment of the present invention.

Figure 4 is a signaling flowchart of the first method of upgrading an RO in an embodiment of the present invention.

Figure 5 is a signaling flowchart of the second method of upgrading an RO in an embodiment of the present invention.

Figure 6 is a signaling flowchart of the third method of upgrading an RO in an embodiment of the present invention.

Figure 7 is a signaling flowchart of the fourth method of upgrading an RO in an embodiment of the present invention.

### DETAILED DESCRIPTION

The present invention is elaborated below with reference to embodiments and accompanying drawings.

A Right Object (RO) for media contents contains one or more Rights For Contents (R4C) items such as "play", "print", and "display". The operations that may be performed for such R4C items include: copy, move, and so on, which are called "operations for rights". In order to control such operations, The information of operation right for right (R4R information) is needed for controlling the operations on the right items in the RO.

Each RO may include one or more R4C items. In order to invoke the R4C more conveniently in the previous operation right information, a unique identifier needs to be defined for each R4C (such as <play>, <print> and <display>) in the same RO so that the terminal may operate the corresponding R4C according to the R4R information. For example, the <play> right item may be expressed as:

```
          <! ELEMENT o-dd:play (o-ex:constraint?)>
          <!ATTLIST o-dd:play o-ex:id ID #REQUIRED>
```

The attribute "id" above is designed to uniquely identify a right item in an RO scope. Other right description labels such as <print> and <display> can be expressed similarly. In this way, the R4C identifier can be invoked conveniently in the R4R information to facilitate operations on an R4C.

Likewise, the information of operation right for right (R4R information) can be expressed as one or more R4R items. An R4R item contains an operation command, an operation object, and operation parameters. The operation command indicates the operations for rights such as "copy" and "move"; the operation object is any right item in the RO, or any combination of right items. If the operation object is empty, it indicates that the operation is effective on the whole RO. The operation parameters include: the enable flag of the right consumption status, target device information, and the target DRM system.

For example, the <copy> label indicative of the function of copying a right can be described as:

```
          <!ELEMENT copy(right_items?....)>
          <!ELEMENT right_items (right_item+)>
          <!ELEMENT right_item (#PCDATA)>
```

wherein, <right_items> indicates the currently described R4R item (copy).

For certain R4C, the value of each <right_item> label corresponds to the identifier of an R4C. If the <right_items> label contains multiple <right_item> labels, it indicates that the currently described R4R item is effective on multiple R4C items such as copy (display, print). The labels such as <move> can be expressed as similar structures. If the <right_items> label does not occur in <copy> (namely, the operation object is empty), it indicates that the currently described R4R item is effective on the whole RO (copy the whole RO).

The enable flag of the right consumption status is designed to describe whether the operation on the R4C contains the current consumption status of the R4C. Taking the copy operation as an example, the enable flag may clarify whether the copy operation contains the current consumption status of the R4C right item (like the information "the content has been consumed for 6 of 10 authorized times"). For example, the <right_item> label may include the following attribute:

```
          <!ATTLIST right_item state_included ("yes"|"no") "no">
```

The value of this attribute is "yes" or "no". Taking the copy operation as an example:
if the value of this attribute is set to "yes", it indicates that: when copying an R4C item, the R4C item (including the information such as authorized number of times of consuming) and the current consumption status (like the information "the content has been consumed for 6 of 10 authorized times") should be copied together to the destination;
if the value of this attribute is set to "no", only the right item needs to be copied.

The target device information enables the RI server to control the devices involved in the operation for rights, for example, the target devices to which the R4C can be copied and moved. For example, the <copy> label may further include the following information:

```
          <!ELEMENT copy(right_items?, to?....)>
          <!ELEMENT to (deviceType*,deviceId*....)>
          <!ELEMENT deviceType (#PCDATA)>
          <!ELEMENT deviceId (#PCDATA)>
```

A <to> sub-label is added into the <copy> label to describe the destination of the copy operation. Generally, a <to> sub-label is the identifier of the target device type, or the identity of the target device, or the identifier of the target user such as WIM and IMSI. If no <to> sub-label occurs, the destination of the copy operation is not restricted. The <to> label contains a <deviceType> label and a <deviceId> label. These two labels may occur in the <to> label for any times, and are used for describing the information about the target device, for example, identifier of the device type. If a <to> label contains multiple <deviceType> labels, the copy operation can be performed onto multiple types of devices; if a <to> label contains multiple <deviceId> labels, the copy operation can be performed onto multiple specific devices. If neither <deviceType> label nor <deviceId> occurs, the destination of the copy operation is not restricted.

The target DRM system enables the RI server to control the target DRM systems involved in the operation for rights, for example, the target DRM systems to which the R4C can be copied and moved. For example, the <copy> label may further include the following information:

```
          <!ELEMENT copy(right_items?, to?....)>
          <!ELEMENT to (...dst_drm?)>
          <!ELEMENT dst_drm(drm_id+)>
          <!ELEMENT drm_id (#PCDATA)>
```

A <dst_drm> sub-label is added into the <to> label to describe the target DRM system of the copy operation. Generally, a <dst_drm> sub-label is the identifier of the target DRM system. If no <dst_drm> sub-label occurs, the target DRM system of the copy operation is not restricted. A <dst_drm> label may contain multiple <drm_id> labels. A <drm_id> label means that the right can be copied into multiple DRM systems.

The R4R information contains one or more R4R items mentioned above. Such R4R items can be combined into an independent RO, called "Right Object For Rights (RO4R)"; such R4R items together with the R4C can also be set as a part of an RO called "hybrid RO". The two modes are described below.

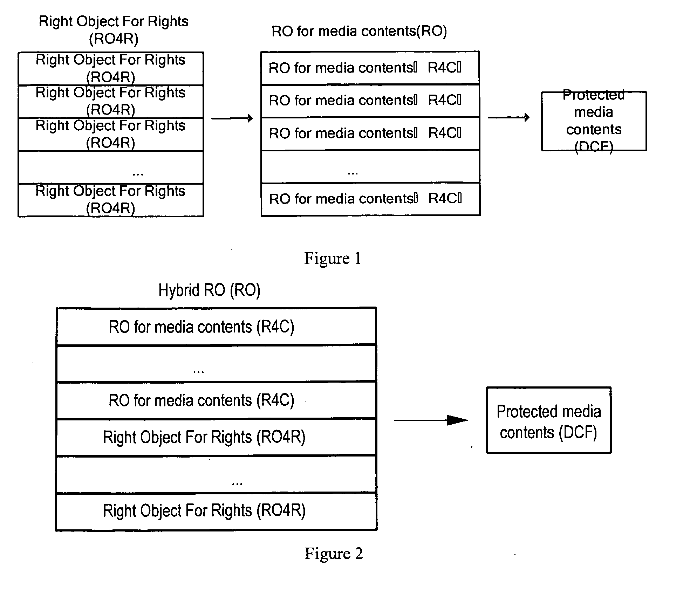

Figure 1 shows the relations between RO4R, RO and DCF in the RO4R mode. The RO4R is a type of RO for controlling operations on the R4C or RO. The relation between an RO4R and an RO is similar to the relation between an RO and a protected media content - DRM Content Format (DCF). An RO contains at least one R4C; and an RO4R contains at least one R4R. According to the right item described in the RO, the DRM agent controls the application (such as player) to operate the DCF (for example, play the DCF). According to the operation right information described in the RO4R, the DRM agent controls the operations (such as copying and moving) on the RO or the right items in the RO.

The labels in an RO4R are:

```
          <!ELEMENT right4rights (context, agreement)>
          <!ATTLIST right4rights id ID #REQUIRED>
          <!ELEMENT agreement(right_object, opera_control_info)>
          <!ELEMENT right_object(context)>
          <!ELEMENT opera_control_info(copy*,move*,split*,share*....)>
```

wherein, the <right4rights> label is a root node of the RO4R, and contains two sub-labels:
<context> sub-label, designed to describe the information on the RO4R, such as unique identifier of the RO4R; and
<agreement> sub-label, designed to describe the R4R information;
the rights for an RO are described in the <agreement> sub-label;
the <right4rights> label contains an attribute ID, which serves as an auxiliary
identifier for identifying an RO4R, wherein:
the <agreement> label contains two sub-labels:
<right_object> sub-label, designed to describe the information on the RO that can be operated, such as RO identifier; and
<opera_control_info> sub-label, designed to describe the operation rights for one or more R4C items in an RO described by the <right_object>.

As described above, an RO4R includes:
an RO4R identifier, designed to describe the information on the RO4R;
an RO identifier, designed to determine the RO for which the RO4R is intended; and
an R4R item, designed to describe the operating right for an RO or the operating right for the R4C items in the RO;
after obtaining the RO and the RO4R, the terminal operates the RO or the R4C in the RO according to the operation right information in the RO4R,such as copying, mocing and so on.

Figure 2 shows the relations between R4R, RO and DCF in the hybrid RO mode (namely, the R4R and the R4C are located together in the RO). An RO contains at least one R4C and at least one R4R. According to the R4C in the RO, the DRM agent controls the application (such as player) to operate the DCF (for example, play the DCF). According to the R4R described in the RO, the DRM agent controls the operations (such as copy and move) on the RO or the R4C. After the terminal obtains an RO that contains one or more R4R items, the terminal needs to search for the R4R items contained in the RO and execute the corresponding operation as controlled by the R4R, if the terminal needs to operate all or some of the R4C items in the RO.

If the R4R and the R4C are put into a hybrid RO, preferably, combined formally, namely, the R4R is not independent of the R4C but embedded in the R4C, it indicates that the terminal has a certain right for operating the R4C; and the R4C does not need to be identified uniquely any longer. For example, the syntax of an play right that can be operated may be expressed as:

```
          <!ELEMENT o-dd:play (o-ex:constraint?, opera_control_info)>
          <!ELEMENT opera_control_info(copy*,move*,split*,share*....)>
          Given below is an example of three authorized times of playing:
          <play>
          <count>10</count>    <!-The media content is allowed to be played for 10 times-->
          <move>3</move>          <!-This play is allowed to be moved for three times-->
          </play>
```

The user or the terminal can request the RI server for the R4C and the R4R in a certain way in order to control the operations for media contents and the operations for rights. For example, the user can log in to the relevant website to operate on the web page and subscribe for the desired media contents; or subscribe for the R4C or R4R; the user can also use a terminal to originate a subscription request directly, and obtain R4C and R4R by sending a request message to the RI directly or through WAP or SMS. Such requests will finally arrive at the RI server.

After generating a hybrid RO, the RI can send it to the terminal. For example, after the RO request protocol (1-pass protocol and 2-pass protocol) is extended, the RO Response sent by the RI to the terminal may contain both R4C items and R4R items. For example, the RO Response may contain the following contents:

```
        <move>
            <right_items>
                  <right_item>xxxx</right_item>
             </right_items>
        </move>
```

After receiving the R4R in the hybrid RO, the terminal obtains the right of operating the corresponding R4C, thus able to control the user to perform operations for rights.

After obtaining the RO or hybrid RO, the user can add more R4R items. The RI can combine the added R4R items into a separate RO4R or a new hybrid RO. The new hybrid RO contains the old RO and the newly added R4R. After receiving the new hybrid RO, the terminal substitutes it for the old RO.

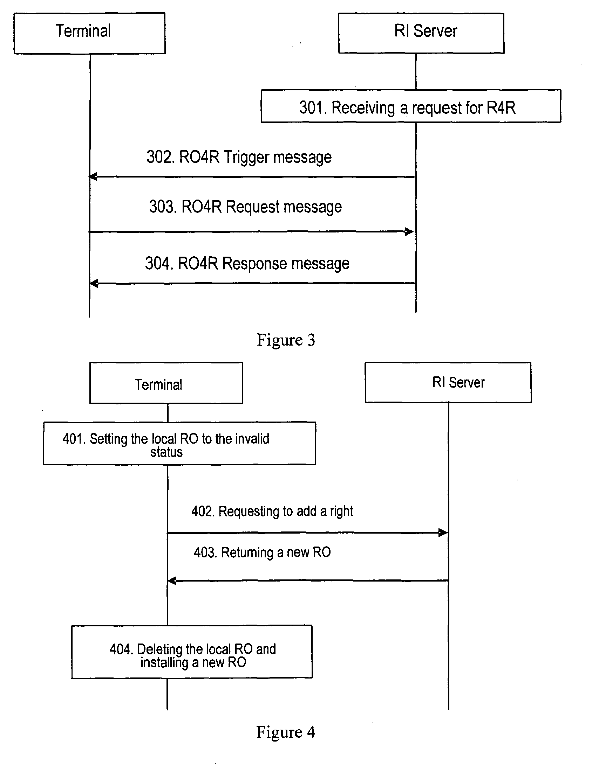

Figure 3 is a signaling flowchart of adding R4R information in an embodiment of the present invention. Taking the RO4R mode as an example, the flowchart includes the steps as described hereinafter.

Step 301: The terminal or the user requests the RI server for an R4R in a certain way. For example, the user logs into the relevant website and subscribes for an R4R on the web page. Such requests will finally arrive at the RI server. Such requests include these parameters:
information on the existing RO of the terminal, possibly including the current consumption status corresponding to the RO;
the right of operating the existing RO, which the user requests to add, for example, copying and moving; and possibly, the current consumption status corresponding to the RO.

The RI server obtains the existing RO of the terminal in two ways:
(i) the request message sent by the terminal includes the existing RO of the terminal; or
(ii) the request message sent by the terminal includes the identifier of the existing RO of the terminal; and the RI server stores the ROs that have been requested by the terminal, and obtains the existing RO of the terminal according to the received identifier of the RO.

Step 302: After receiving the request of obtaining an R4R, the RI server generates an RO4R according to the parameters therein, and then pushes an RO trigger message to the terminal, notifying the terminal that the existing RO4R is retrievable. The trigger message contains an RO4R identifier, and possibly contains the parameters shown in Table 1:

**Table 1**

| Message parameter | Meaning |
|---|---|
| Device ID | Identifier of the device |
| RI ID | Identifier of the RI |
| Device Nonce | One-off random quantity of devices |
| Request Time | Request time |
| RO4R Info | Information on the RO4R, for example, ID of the RO4R, ID of the corresponding RO. |
| Signature | Signature of the RI server |

Step 303: After obtaining the trigger message, the terminal obtains the ID of the RO4R, and generates and sends an RO request message that carries the ID of the RO4R to the RI server. Through this message, the terminal device requests the specific RO4R from the RI server. The request message may contain the parameters shown in Table 2:

**Table 2**

| Message parameter | Meaning |
|---|---|
| Device ID | Identifier of the device |
| RI ID | Identifier of the RI |
| Device Nonce | One-off random quantity of devices |
| Request Time | Request time |
| R04R Info | Information on the RO4R, for example, ID of the RO4R. |
| Signature | Signature of the device |

Step 304: According to the RO identifier in the request message, the RI server finds the previously generated RO4R, generates an RO response that contains the RO4R, and then sends the RO response to the terminal. The terminal can retrieve the RO4R from the received response. In the process of retrieving the RO4R, the terminal device may authenticate the digital signature of the RO4R signed by the RI. If the authentication of the digital signature succeeds, the terminal may save this RO4R to the local directory so that it will be available when the RO for media contents is to be operated in the future. The terminal may read the R4R information in the RO4R directly without storing the RO, and operate the RO for media contents accordingly. If the digital signature authentication fails, the terminal will discard the RO4R. The RO4R response may contain the parameters shown in Table 3:

**Table 3**

| Message parameter | Meaning |
|---|---|
| Status | Indicates whether the RI responds to the R04R Request message successfully |
| Device ID | Identifier of the device |
| RI ID | Identifier of the RI |
| Device Nonce | One-off random quantity of devices |
| Protected RO4Rs | Protected RO4R(s), which may follow the digital signature affixed by the RI for the RO4R. |
| Signature | Signature of the RI for this message |

If there are more than one protected RO4R in the previous message, every single RO4R follows the digital signature affixed by an RI for this RO4R; or multiple RO4Rs follow the general digital signature affixed by an RI for such RO4Rs.

In the previous steps, step 302 and step 303 may be omitted. That is, after generating the RO4R, the RI server generates an RO response directly and then sends the RO response to the terminal.

In the practical application, if the RI server knows that a terminal already owns an RO for media contents (for example, by recording the information on the RO purchased by the terminal) while the user does not purchase the right for operation for the RO, the RI server can push an RO response actively, without receiving any request from the terminal. Therefore, the terminal obtains an R4R. This is often a means for the RI to promote services.

For the hybrid RO mode, the process of adding The R4R for an existing RO for media contents is different from the previous process, and this process is performed through RO upgrading. That is, an RO containing no desired R4R is upgraded to an RO containing the R4R, so that the terminal is entitled to operate the RO. More particularly, the processes shown in Figure 4, Figure 5, Figure 6 or Figure 7 may apply.

Figure 4 is a flowchart of the first method of upgrading an RO in an embodiment of the present invention. The procedure includes the steps as described hereinafter.

Step 401: The terminal sets the local RO, for which a right needs to be added, to the invalid status.

Step 402: The terminal requests the RI server to add a right to the RO. The request message carries the existing RO of the terminal and the right which the user requests to add. If the RI server stores the ROs that have been issued, the request message may carry the ID of the existing RO of the terminal; if the existing RO of the terminal is a stateful RO, the request message may also carry the current status information corresponding to the RO.

Step 403: The terminal receives a response from the RI server, with the new hybrid RO carried in the response. The new RO contains the existing rights of the terminal and the new R4R. The existing rights of the terminal come in two circumstances:
if the existing RO of the terminal mentioned in step 402 is a stateless RO (namely, the terminal does not need to maintain status information for the RO), the existing rights of the terminal will contain all the rights included in the existing RO of the terminal mentioned in step 402;
if the existing RO of the terminal mentioned in step 402 is a stateful RO (namely, the terminal needs to maintain status information for the RO), the existing rights of the terminal are a result of combining the existing RO of the terminal mentioned in step 402 and the current status information mentioned in step 402, as exemplified below:
   the existing RO of the terminal includes the following rights:
      <play> <count>20</count></play>
      the current status information is: "20 times in total, 5 times consumed by now";
      in this case, the "existing rights of the terminal" mentioned in step 403 are:
      <play><count> 15 </count></play>

That is, the terminal holds the right of playing the content for 15 times.

Step 404: The terminal deletes the RO set to the invalid status, and then installs the received hybrid RO.

After setting the existing RO to the invalid status, the terminal receives a response from the RI server. If the response carries an error code, the terminal will reset the invalid RO to the valid status again.

The second method of upgrading an RO is:
after receiving a request of obtaining an R4R, the RI sends a take-back trigger message to the terminal, thus triggering the process of taking back an existing RO of the terminal; and
the RI issues a new RO to the terminal in the way as illustrated in Figure 4.

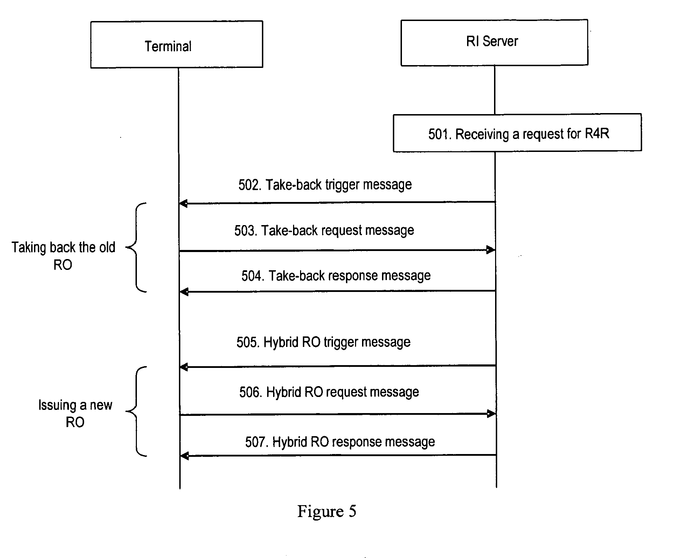

Figure 5 is a flowchart of the second method of upgrading an RO in an embodiment of the present invention. The flowchart includes the steps as described hereinafter.

Step 501: Like in step 301, the terminal or the user requests an R4R from the RI server in a certain way.

Step 502: After receiving the request for an R4R, the RI sends a take-back trigger message to the terminal. The take-back trigger message carries the ID of the RO of the R4R requested by the terminal.

Step 503: After receiving the take-back trigger message, the terminal sends a take-back request message to the RI. The message includes the RO mentioned in step 502. If the RO is stateful, the RO may contain the current consumption status of the RO. The terminal sets the local RO to the invalid status while sending the take-back request message to the RI.

Step 504: After receiving the take-back request, the RI sends a take-back acknowledgement to the terminal; after receiving the take-back acknowledgement, the terminal deletes the local RO.

The subsequent steps are similar to steps 302-304 (the RO4R is sent in steps 302-304, but the RO is sent the steps subsequent to step 504). The RI may send a new RO (hybrid RO) to the terminal directly; or the RI sends a trigger message first, and then the terminal retrieves the new RO from the RI, as shown in Figure 5.

Step 505: The RI pushes a hybrid RO trigger message to the terminal, notifying the terminal that a hybrid RO is retrievable. The hybrid RO trigger message contains a hybrid RO identifier.

Step 506: After receiving the hybrid RO trigger message, the terminal sends a hybrid RO request message to the RI, with the ID of the new RO carried in the request.

Step 507: The RI sends a response to the terminal, with the new RO carried in the response. The RO contains not only the rights reflected by the previously deleted RO and its status information (if the RO is stateful), but also the rights which the user requests to operate.

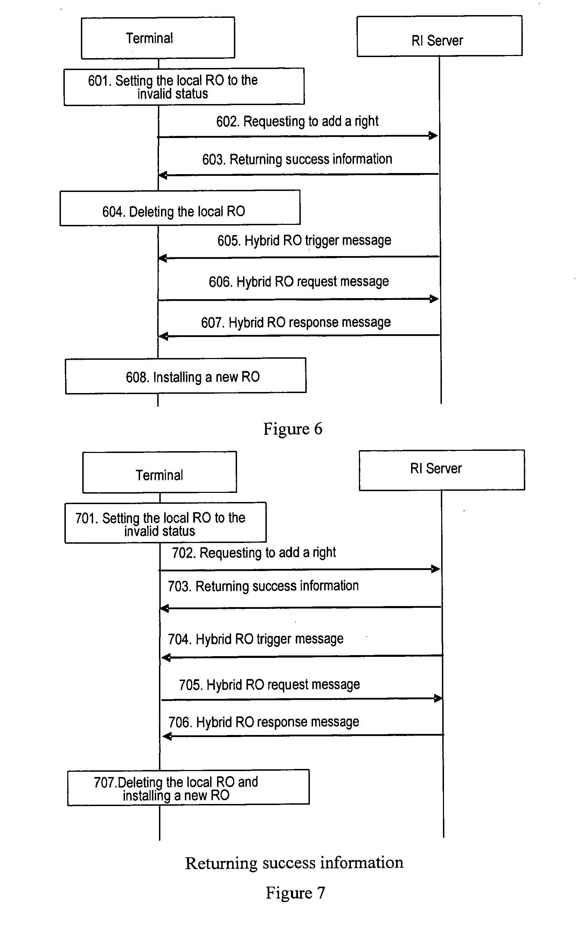

Figure 6 is a flowchart of the third method of upgrading an RO in an embodiment of the present invention. The flowchart includes the steps as described hereinafter.

Step 601: The terminal sets the local RO, for which a right needs to be added, to the invalid status.

Step 602: The terminal requests the RI server to add a right. The request message carries the existing RO of the terminal and the RO which the user requests to add. If the RI server stores the ROs that have been issued, the request message may carry only the ID of the existing RO of the terminal; if the existing RO of the terminal is a stateful RO, the request message need also carry the current status information corresponding to the RO.

Step 603: The terminal receives a response returned by the RI server, with the response indicating whether the RI server accepts the request of the terminal.

Step 604: If the response in step 603 indicates that the IR accepts the request of the terminal, the terminal will delete the RO already set to the invalid status.

Step 605: The RI pushes a hybrid RO trigger message to the terminal, notifying the terminal that a hybrid RO is retrievable. The hybrid RO trigger message contains a hybrid RO identifier.

Step 606: After receiving the hybrid RO trigger message, the terminal sends a hybrid RO request message to the RI, with the ID of the new RO carried in the request.

Step 607: The RI sends a response to the terminal, with the new RO carried in the response. The RO contains not only the rights reflected by the previously deleted RO and its status information (if the RO is stateful), but also the rights which the user requests to operate.

Step 607: The terminal installs a new RO.

Figure 7 is a flowchart of the fourth method of upgrading an RO in an embodiment of the present invention. The flowchart includes the steps as described hereinafter.

Step 701: The terminal sets the local RO, for which a right needs to be added, to the invalid status.

Step 702: The terminal requests the RI server to add a right. The request message carries the existing RO of the terminal and the RO which the user requests to add. If the RI server stores the ROs that have been issued, the request message may carry only the ID of the existing RO of the terminal; if the existing RO of the terminal is a stateful RO, the request message need also carry the current status information corresponding to the RO.

Step 703: The terminal receives a response returned by the RI server, with the response indicating whether the RI server accepts the request of the terminal.

Step 704: The RI pushes a hybrid RO trigger message to the terminal, notifying the terminal that a hybrid RO is retrievable. The hybrid RO trigger message contains a hybrid RO identifier. Preferably, the trigger message also contains the ID of the existing RO mentioned in step 701 and step 702.

Step 705: After receiving the hybrid RO trigger message, the terminal sends a hybrid RO request message to the RI, with the ID of the new RO carried in the request.

Step 706: The RI sends a response to the terminal, with the new RO carried in the response. The RO contains not only the rights reflected by the previously deleted RO and its status information (if the RO is stateful), but also the rights which the user requests to operate. Preferably, if the trigger message in step 704 does not contain the identifier of the existing RO, the response should also contain the identifier of the existing RO mentioned in step 701 and step 702.

Step 707: The terminal deletes the existing RO mentioned in step 701 and step 702, and installs the new RO mentioned in step 706.

The enbodiments of the present invention also cover the terminals or servers described below.

As shown in figure 8, a terminal includes:
a module(801), adapted to obtain a hybrid RO generated by the RI server, wherein the hybrid RO contains R4C items and R4Rs; and
a module(802), adapted to operate an R4C item in the hybrid RO according to the R4R.

As shown in the figure 9, a server includes:
a module(901), adapted to obtain the existing RO of a terminal, with an R4C carried in the RO;
a module(902), adapted to generate the R4R information which indicates that the terminal is entitled to operate the R4C; and
a module(903), adapted to send the R4R information to the terminal.

As shown in the figure 10, another terminal includes:
a module(1001), adapted to receive an RO4R from the RI server, with an R4R item carried in the RO; and
a module(1002), adapted to operate an R4C according to the R4R item.

As shown in the figure 11, another terminal includes:
a module(1101), adapted to receive a hybrid RO from the RI server, with the existing right of the terminal and a newly added R4R carried in the hybrid RO;
a module(1102), adapted to substitute the received hybrid RO for the existing RO; and
a module(1103), adapted to operate the R4C in the hybrid RO according to the new R4R.

Although the invention has been described through some exemplary embodiments, the invention is not limited to such embodiments. It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for operating a Right For Content (R4C), comprising:
obtaining, by a terminal, a hybrid Right Object (RO) that contains R4C items and Right For Rights (R4R) items and is generated by the RI server; and
operating the R4C items in the hybrid RO according to the R4R.

2. The method of claim 1, wherein the R4C item has a unique identifier, and the R4R contains an identifier of the R4C on which the R4R is effective.

3. The method of claim 1, wherein the R4C item contains the R4R that indicates the right of operating the R4C.

4. The method of claim 2 or claim 3, wherein the R4R further contains an enable flag of the right consumption status, or target device information, or target DRM system identifier.

5. The method of claim 2, wherein the operation on the R4C item in the hybrid RO is: move, or copy.

6. A method for adding an R4R, comprising:
obtaining, by an RI server, the existing RO of the terminal, with the R4C carried in the RO;
generating the R4R information which indicates that the terminal is entitled to operate the R4C; and
sending the R4R information to the terminal.

7. The method of claim 6, wherein:
the RI server sends a trigger message to the terminal before sending the R4R information to the terminal;
the trigger message contains the identifier of the R4R information; and
after receiving the request message generated according to the trigger message from the terminal, the RI server sends a response to the terminal, with the R4R information carried in the response.

8. The method of claim 7, wherein the response to the R4R information further contains an identifier of the existing RO of the terminal.

9. The method of claim 6, wherein the R4R information is an RO4R which contains R4R items.

10. The method of claim 9, wherein the RO4R contains an identifier of the RO for media contents owned by the terminal.

11. The method of claim 10, wherein the RO4R further contains the identifier of the right items in the RO for media contents owned by the terminal.

12. The method of claim 6, wherein the R4R information is a hybrid RO which contains existing rights of the terminal and the newly added R4R.

13. The method of claim 12, wherein:
the RI server sends a take-back trigger message to the terminal before sending the hybrid RO to the terminal;
the take-back trigger message contains the identifier of the existing RO of the terminal;
after receiving the take-back request message generated according to the take-back trigger message from the terminal, the RI server sends an acknowledgement to the terminal, with the identifier of the existing RO of the terminal carried in the acknowledgement.

14. The method of claim 6, wherein the existing RO of the terminal is obtained by the RI server in two ways:
(i) the request message sent by the terminal contains the existing RO of the terminal; or
(ii) the request message sent by the terminal contains the identifier of the existing RO of the terminal; and the RI server stores the ROs that have been requested by the terminal, and obtains the existing RO of the terminal according to the received identifier of the RO.

15. The method of claim 14, wherein:
the received request message further contains operation right which the user requests to add; and
the RI server generates R4R information according to the request message, with the R4R information carrying the added operation right.

16. The method of claim 14, wherein after receiving the request message from the terminal, the RI server returns a response to the terminal, indicating whether the RI server accepts the request of the terminal.

17. A method for adding an R4R, comprising:
receiving, by a terminal, an RO4R that contains R4R items from the RI server; and
operating the R4C according to the R4R item.

18. The method of claim 17, before receiving the RO4R, comprising:
by the terminal, receiving, a trigger message from the RI server, with the identifier of the RO4R carried in the trigger message; and
generating a request message according to the trigger message and sending it to the RI server.

19. The method of claim 17, wherein the operation on an RO for media contents is move, or copy.

20. The method of claim 17, wherein:
the terminal operates the RO for media contents directly according to the RO4R in the message; or
the terminal saves the RO4R and then operates the RO for media contents according to the saved RO4R.

21. The method of claim 17, before receiving the RO4R, comprising:
by the terminal, sending a request of adding an R4R to the RI server, wherein the request carries the existing RO for media contents of the terminal or the identifier thereof; and if the RO is stateful, the request further carries the information on the RO status.

22. The method of claim 21, wherein the request of adding an R4R sent by the terminal further contains the R4R to be added.

23. A method for adding an R4R, comprising:
receiving, by a terminal, the hybrid RO from the RI server, with the hybrid RO carrying the existing rights of the terminal and the newly added R4R;
substituting the received hybrid RO for the existing RO; and
operating the R4C in the hybrid RO according to the newly added R4R.

24. The method of claim 23, before receiving the hybrid RO, comprising:
by the terminal, receiving the trigger message from the RI server, with the identifier of the hybrid RO carried in the trigger message; and
generating a request message according to the trigger message and sending it to the RI server.

25. The method of claim 23, before receiving the hybrid RO, comprising:
by the terminal, requesting an RO from the RI server, wherein, the request carries the existing RO of the terminal, or the identifier thereof; and if the RO is stateful, the request further carries the current status information of the RO.

26. The method of claim 25, wherein the request further comprises R4R to be added.

27. The method of claim 25, wherein the terminal sets the existing RO, for which the request is intended, to the invalid status.

28. The method of claim 27, wherein:
after setting the existing RO to the invalid status, the terminal receives a response that contains a hybrid RO and is sent from the RI server; and
the terminal deletes the RO already set to the invalid status, and then installs the received hybrid RO.

29. The method of claim 27, wherein:
after setting the existing RO to the invalid status, the terminal receives a response that contains an error code and is sent from the RI server; and
the terminal resets the RO, which is already set to the invalid status, to the valid status again.

30. The method of claim 27, wherein:
after setting the existing RO to the invalid status, the terminal receives a response from the RI server, indicating that the RI server accepts the request of the terminal;
the terminal deletes the RO already set to the invalid status, and receives a response from the RI server, with a hybrid RO carried in the response; and
the terminal installs the received hybrid RO.

31. The method of claim 27, wherein:
after setting the existing RO to the invalid status, the terminal receives a response from the RI server, indicating that the RI server accepts the request of the terminal;
the terminal receives a response from the RI server, with the hybrid RO carried in the response;
the terminal deletes the RO already set to the invalid status, and then installs the received hybrid RO.

32. The method of claim 27, wherein:
the terminal deletes the RO according to the identifier of the existing RO, with the identifier of the existing RO carried in the response or in the trigger message sent by the server.

33. The method of claim 23, wherein:
before receiving the hybrid RO, the terminal receives a take-back acknowledgement, with the identifier of the existing RO of the terminal carried in the take-back acknowledgement; and
the terminal deletes the existing RO according to the identifier of the existing RO.

34. The method of claim 33, wherein:
before receiving the take-back acknowledgement, the terminal receives a take-back trigger message, with the identifier of the existing RO of the terminal carried in the take-back trigger message;
according to the take-back trigger message, the terminal sets the existing RO to the invalid status or deletes the existing RO, and then generates a take-back request and sends it to the RI server.

35. A terminal, comprising:
a module, adapted to obtain a hybrid RO that contains R4C items and R4R items and is generated by the RI server; and
a module, adapted to operate the R4C items in the hybrid RO according to the R4R.

36. A server, comprising:
a module, adapted to obtain an existing RO of the terminal, with the R4C carried in the RO;
a module, adapted to generate the R4R information which indicates that the terminal is entitled to operate the R4C; and
a module, adapted to send the R4R information to the terminal.

37. A terminal, comprising:
a module, adapted to receive an RO4R that contains R4R items from the RI server; and
a module, adapted to operate the R4C according to the R4R items.

38. A terminal, comprising:
a module, adapted to receive the hybrid RO from the RI server, with the hybrid RO carrying the existing rights of the terminal and the newly added R4R;
a module, adapted to substitute the received hybrid RO for the existing RO; and
a module, adapted to operate the R4C items in the hybrid RO according to the newly added R4R.
